# EUROPÄISCHE PATENTSCHRIFT

(11) **EP 1 647 627 B1**
(45) Veröffentlichungstag und Bekanntmachung des Hinweises auf die Patenterteilung: **03.11.2010**
(21) Anmeldenummer: 05021770.2
(22) Anmeldetag: 06.10.2005
(51) Int. Cl.: D06H 5/00, E04F 10/02

(54) **Überlappend geklebte Markisenbahn**
Overlapping bonded awning web
Toile de store ayant des bords collés se recouvrant

(30) Priorität: 13.10.2004 DE 102004049934
(43) Veröffentlichungstag der Anmeldung: 19.04.2006
(73) Patentinhaber: MHZ HACHTEL GmbH & Co. KG, D-70771 Leinfelden-Echterdingen (DE)
(72) Erfinder: Lindfeld, Werner, 73240 Wendlingen (DE)
(74) Vertreter: Rüger, Barthelt & Abel Patentanwälte

(56) Entgegenhaltungen:
- EP-A- 0 032 703
- EP-A- 1 083 270
- DE-A1- 2 601 967
- DE-B3- 10 306 518
- US-A- 5 370 756

## Beschreibung

In der DE 102 14 628 A1 ist eine Markisenbahn beschrieben, die sich aus mehreren einzelnen Teilbahnen zusammensetzt. Die Teilbahnen verlaufen auf Stoß nebeneinander. Die Stoßstelle zwischen den Teilbahnen ist mit Hilfe eines Verbindungsbandes, das den Stoß überbrückt, miteinander stoffschlüssig überbrückt. Das Verbindungsband besteht aus einem Gewebe, das mit Hilfe eines Schmelzklebers mit den beiden Teilbahnen verklebt ist.

Bei dieser bekannten Anordnung soll das Gewebe des Verbindungsbandes sehr offen gewebt sein, damit es optisch möglichst wenig in Erscheinung tritt und auch beim Aufwickeln der Markisenbahn keine allzu starke Verdickung verursacht.

Das Verbindungsband hat keinen Einfluss auf die Dehnfähigkeit der am Stoß liegenden Kanten.

Aus der älteren, nicht vorveröffentlichten DE 102 004 028 536 ist es bekannt, zum Verbinden der auf Stoß liegenden Teilbahnen ein Verbindungsband zu verwenden, das ein Gewebe enthält, dass, zumindest in Längsrichtung der Markisenbahnen, eine höhere Dehn- und/oder Reißfestigkeit in beiden Achsrichtungen aufweist. Auf dieser Weise soll einerseits ein sehr fester Stoß erzeugt werden und auf der anderen Seite die Dehnung des Markisentuches in Bewegungsrichtung begrenzt werden.

Das dort verwendete Verbindungsband verwendet Glasfasern mit Schmelzkleber, um im Bereich der Stoßstelle eine möglichst geringe Verdickung zu erzielen.

Das Kleben auf Stoß setzt eine sehr präzise Zuführung der Teilbahnen voraus. Geringe Schwankungen beim Verkleben auf Stoß führen zu entsprechenden Spalten an der Stoßstelle mit den daraus resultierenden Problemen der unterschiedlichen Lichtdurchlässigkeit, was gegebenenfalls einen Riss in der Markisenbahn simuliert und unschön wirkt.

Weitere Arten, Tuchbahnen am Stoß zu einer Markisenbahn zu verbinden, sind aus der DE 196 02 575 A1 bekannt. Gemäß einer ersten dort beschriebenen Variante werden die beiden Teilbahnen jeweils auf der Außenseite in einem streifenförmigen Bereich, der längs der Stoßkante verläuft, mit einem Schmelzkleber versehen. Sodann werden die Tuchbahnen auf Stoß nebeneinander gelegt und es werden nacheinander auf beiden seiten Streifen aufgelegt. Diese Streifen bestehen aus einem Träger und an dem Träger anhaftenden Fasern, die sämtlichst in Querrichtung des Trägers liegen. Durch Einwirken von Wärme sollen die Fasern mit dem Schmelzkleber verbunden werden. Anschließend wird der Träger von den Fasern abgezogen. Auf diese Weise wird auf beiden Seiten der Stoß durch die Fasern, die ausschließlich quer zur Stoßlängserstreckung liegen, bandagiert.

Bei einer zweiten Variante werden die beiden Tuchbahnen längs eines parallel zum Stoß verlaufenden Streifens verdünnt. Verminderung der Materialdicke wird erreicht entweder durch Einwirkung von Wärme und Druck bei thermoplastischen Grundmaterial oder indem in diesem Bereich die Kettfäden entfernt werden. Die Bahnen werden in dem verdünnten Bereich übereinander gelegt und wiederum von der Außenseite her im Überlappungsbereich bandagiert. Im Überlappungsbereich selbst sind keine zusätzlichen Verbindungsfasern oder sonst welche Träger vorhanden.

Auch hier wiederum werden die zu verbindenden Materialbahnen auf der Außenseite mit einer Schmelzkleberschicht versehen, die beim Verkleben in den Überlappungsstoß eindiffundieren soll.

Die Verbindungsart ist technisch kompliziert zu reaslisieren, weil eine Vorbehandlung der Tuchbahnen an der Stoßstelle erforderlich ist.

Eine zusätzliche Verstärkung in dem Sinne, dass die Tuchbahnen im Stoßbereich in Längsrichtung weniger dehnbar sind als in dem Bereich daneben, wird ebenfalls praktisch nicht erreicht.

Aus der DE 26 01 967 A1 ist ein Verfahren zum Verbinden von Textilbahnen mittels einer hitzebeständigen Klebenaht bekannt. Gemäß diesem Verfahren werden die miteinander zu verbindenden Bahnen im Bereich ihrer Seitenkanten überlappend angeordnet. In den Spalt des Überlappungsbereiches wird ein Gewebestreifen eingelegt, der zuvor mit einem Quellmittel getränkt ist. Das Quellmittel lässt die Fäden des Gewebestreifens aufquellen. Die so vorbereitete Fügestelle wird anschließend in einer Presse unter Hitze zusammengepresst, wobei das Quellmittel verdunstet und gleichzeitig eine stoffschlüssige Verbindung zwischen den Textilbahnen erzeugt wird.

Die DE 103 06 518 B3 beschreibt eine Markisenbahn für Markisenanlagen. Die Markisenbahn besteht aus zwei Teilbahnen, die im Bereich der Stoßstelle überlappend vernäht sind. In die Überlappungsstelle wird ein Bewehrungssteifen eingelegt, der aus einem Kunststoffstreifen besteht, in dem Monofilamente in Gestalt von Glasfasern eingelegt sind. Die Monofilamente verlaufen in Längsrichtung des Streifens. Der Stoß wird anschließend vernäht.

Die EP 1 083 270 A2 (nächst kommender Stand der Technik) beschreibt ein Verfahren zum Verbinden von Markisenbahnen. An der Stoßstelle werden die miteinander zu verbindenden Markisenbahnen entsprechend der Breite des Stoßes stufenförmig abgeschliffen. Zwischen die so entstehenden Randbereiche mit verminderter Dicke wird ein Klebeband eingelegt, das in beiden Richtungen klebfähig ist. Anschließend wird die Stoßstelle auf die Schmelztemperatur des Klebebands erhitzt und zusammengepresst bis der Schmelzkleber hinreichend fest geworden ist.

Ausgehend hiervon ist es Aufgabe der Erfindung eine Markisenbahn zu schaffen, die sich leichter aus Teilbahnen herstellen lässt.

Diese Aufgabe wird erfindungsgemäß mit der Tuch- oder Folienbahn nach Anspruch 1 gelöst.

Die neue Tuch- oder Folienbahn ist an der Stoßstelle überlappend verklebt. Diese Art der Verbindung gibt eine breitflächige Verbindung, die sehr große Kräfte übertragen kann und deswegen auch nicht die Gefahr heraufbeschwört, dass der Wind die Teilbahnen im Nahtbereich voneinander trennt, wenn es zur Ballonbildung kommt.

In der Überlappungsnaht wird ein Schmelzklebeband verwendet, das als separates Band zugeführt ist, das etwa die Breite des Überlappungsbereiches hat.

Durch Nachpressen während des Herstellungsvorgangs wird eine Überlappungsnaht erzeugt, deren Dicke nicht größer ist als das Doppelte der einfachen Lage des Ausgangsmaterials ist. Der Schmelzkleber dringt in die "Löcher" des Grundgewebes ein, was zu einer entsprechenden Dickenreduktion beiträgt. Ein weiterer Beitrag resultiert aus dem Umstand, dass die Fasern oder Fäden des Grundmaterials im Überlappungsbereich flach gedrückt und in die entsprechenden Lücken der anderen Bahn hineingedrückt werden. Durch den festwerdenden Schmelzkleber wird diese Konfiguration fixiert, was ebenfalls zur Dickenreduktion in dem Nahtbereich führt.

Damit bei der Verarbeitung des Schmelzkleberbandes nicht die Gefahr besteht, dass es an der Einlaufstelle durch fortschreitende Erwärmung zu weich wird und abreißt, wird zur Verstärkung ein Träger in Gestalt von Fäden verwendet werden. Die Fäden sind so gewählt, dass sie bei den auftretenden Schmelztemperaturen hinreichend reißfest sind.

Der Träger kann ein textiles Gebilde in Gestalt eines Gewirkes, Gewebes, Gestricks oder Vlies sein.

Die Verwendung eines textilen Flächengebildes gestattet ein lediglich einseitiges Beschichten, so dass beim endgültigen Schmelzklebevorgang der Kleber durch den Träger hindurch diffundiert und die beiden Bahnen miteinander verbindet. Es ist auch möglich, die einzelnen Fäden, aus denen sich der Träger zusammensetzt, für sich mit einen entsprechenden Schmelzkleber zu ummanteln.

Die verwendeten Fäden für den Träger können aus einzelnen Stapelfasern bestehen, oder Monofilamente sein. Das Material eignet sich, je nach Anwendungszweck, hinreichend UV-stabile Materialien, wie beispielsweise auch Glasfaser. Letzteres hätte den Vorteil, dass die Nahtstelle zusätzlich armiert wird im Sinne einer besseren Dehnfestigkeit, um über das Tuch die auftretenden Kräfte vertragen zu können.

Eine weitere Aufgabe der Erfindung besteht darin, eine Markisenbahn zu schaffen, deren Seitenkante gegen Beschädigung geschützt ist.

Im Regelfall ist die Seitenkante eine aus Gewebe bestehenden Markisenbahn, keine geschlossene Webkante. Somit besteht immer die Gefahr, dass diese Kante beschädigt wird oder ausfranst, wenn sie nicht in besondererer weise behandelt ist.

Erfindungsgemäß ist vorgesehen, die Kante mit einem Umbug zu versehen, d.h. das Material der Markisenbahn an dieser Stelle auf sich selbst umzuschlagen und den Umbug mit Hilfe eines Schmelzklebers zu sichern. Der Schmelzkleber wird als verstärktes Band im Umbug zugeführt, um so die gewünschten Eigenschaften zu bekommen.

Durch Nachpressen während des Herstellungsvorgangs kann ein Umbug erzeugt werden, dessen Dicke nicht größer als das Doppelte der einfachen Lage des Ausgangsmaterials ist. Der Schmelzkleber dringt in die "Löcher" des Grundgewebes ein, was zu einer entsprechenden Dickenreduktion beiträgt. Ein weiterer Beitrag resultiert aus dem Umstand, dass die Fasern oder Fäden des Grundmaterials im Umbug flach gedrückt und in die entsprechenden Lücken der anderen Bahn hineingedrückt werden. Durch den festwerdenden Schmelzkleber wird diese Konfiguration fixiert, was ebenfalls zur Dickenreduktion in dem Nahtbereich führt.

Damit bei der Verarbeitung nicht die Gefahr besteht, dass das Schmelzkleberband an der Einlaufstelle des Schmelzklebebands dieses durch fortschreitende Erwärmung zu weich wird und abreißt, wird zur Verstärkung ein Träger in Gestalt von Fäden verwendet. Die Fäden sind so gewählt, dass sie bei den auftretenden Schmelztemperaturen hinreichend reißfest sind. Es braucht in der Reißfestigkeit nicht stabiler zu sein als das Grundmaterial.

Der Träger kann ein textiles Gebilde in Gestalt eines Gewirkes, Gewebes, Gestricks oder Vlies sein.

Die Verwendung eines textilen Flächengebildes gestattet ein lediglich einseitiges Beschichten, so dass beim endgültigen Schmelzklebevorgang der Kleber durch den Träger hindurch diffundiert und die beiden Bahnen miteinander verbindet. Es ist auch möglich, die einzelnen Fäden, aus denen sich der Träger zusammensetzt, für sich mit einen entsprechenden Schmelzkleber zu ummanteln.

Die verwendeten Fäden für den Träger können aus einzelnen Stapelfasern bestehen, oder Monofilamente sein. Das Material eignet sich, je nach Anwendungszweck, hinreichend UV-stabile Materialien, wie beispielsweise auch Glasfaser. Letzteres hätte den Vorteil, dass die Nahtstelle zusätzlich armiert wird im Sinne einer besseren Dehnfestigkeit, um über das Tuch die auftretenden Kräfte vertragen zu können.

Die erforderliche Verstärkung am Rand der Markisenbahn kann nicht mit nur mit Hilfe eines Umbugs erzeugt werden, sondern indem ein Materialstreifen an der Kante befestigt wird, der aus demselben Grundmaterial wie die Markisenbahn besteht. Selbst wenn die Kante dabei keine Webkante ist, und zwar weder an dem Streifen noch an der Markisenbahn, tritt die erforderliche Sicherung gegen Ausfransen durch das Material zum Verbinden der beiden Teile ein.

Es ist vorgesehen, diesen zweiten Streifen mittels eines Schmelzklebers zu sichern bzw. aufzuschweißen. Der erforderliche Schmelzkleber wird als Band zugeführt, um jeweils zu den gewünschten Eigenschaften zu kommen.

Durch Nachpressen während des Herstellungsvorgangs wird eine Kantenverstärkung erzeugt, deren Dicke nicht größer ist als das Doppelte der einfachen Lage des Ausgangsmaterials. Der Schmelzkleber dringt in die Löcher des Grundgewebes ein, was zu einer entsprechenden Dickenreduktion beiträgt. Ein weiterer Beitrag resultiert aus dem Umstand, dass die Fasern oder Fäden des Grundmaterials in dem Bereich des aufgeschweißten bzw. aufgeklebten Streifens flach gedrückt und in die entsprechenden Lücken zwischen den Fäden der jeweils anderen Bahn eingedrückt werden. Durch Festwerden des Schmelzklebers wird diese Konfiguration fixiert, was ebenfalls zur Dickenreduktion in dem Überlappungsbereich führt.

Im Übrigen sind Weiterbildungen der Erfindung Gegenstand von Unteransprüchen. Beim Durchlesen der nachfolgenden Figurenbeschreibung wird dem Fachmann klar, dass eine Reihe von Abwandlungen möglich sind, die sich aus den jeweiligen Umgebungsbedingungen ergeben. Diese Abwandlungen sind für den Fachmann naheliegend und bedürfen keiner eigenen Erläuterung.

In der Zeichnung sind Ausführungsbeispiele des Gegenstandes der Erfindung dargestellt. Es zeigen:
- Fig. 1: eine Gelenkarmmarkise als Anwendungsbeispiel für die Erfindung in einer perspektivischen Darstel- lung;
- Fig. 2: einen Ausschnitt aus der Markisenbahn der Markise nach Fig. 1 unter Veranschaulichung der Überlap- pungsstelle und des Aufbaus der Überlappungsstelle von zwei Teilbahnen;
- Fig. 3: einen Ausschnitt aus dem Randbereich der Markisen- bahn der Markise nach Fig. 1 unter Veranschauli- chung des dort vorgesehenen Umbugs;
- Fig. 4: einen Ausschnitt aus dem Randbereich der Markisen- bahn der Markise nach Fig. 1 unter Veranschauli- chung des dort vorgesehenen Aufdoppelungsstrei- fens;
- Fig. 5: einen Abschnitt eines Schmelzkleberbands aus ein- zeln ummantelten Monofilamenten;
- Fig. 6: einen Ausschnitt aus einem Schmelzkleberband unter Verwendung einer Folie.

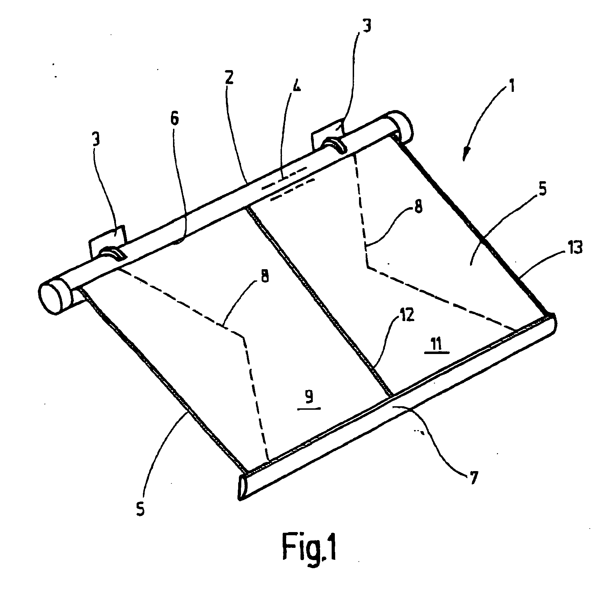

Als möglichen Einsatzbereich der Erfindung ist in Fig. 1 eine Gelenkarmmarkise 1 gezeigt. Zu der Gelenkarmmarkise 1 gehört ein Gehäuse 2, das über einen Wandhalter 3 an einer nicht weiter veranschaulichten Gebäudefasade befestigt ist. In dem Gehäuse 2 ist drehbar eine gestrichelt angedeutete Wickelwelle 4 drehbar gelagert an der mit einer Kante eine Markisenbahn 5 befestigt ist. Die Markisenbahn 5 läuft über einen Tuchschlitz 6 aus dem Gehäuse 2 heraus. Die ihrer von der Wickelwelle 4 abliegende Kante ist an einer Fallschiene 7 befestigt. Die Fallschiene 7 wird in bekannter Weise von zwei Gelenkarmen 8 getragen, die in der Fig. 1 gestrichelt angedeutet sind. Die Gelenkarme 8 sind unterhalb des Gehäuses 2 an den Wandhaltern anscharniert.

Die Markisenbahn 5 setzt sich aus zwei Teilbahnen 9 und 11 zusammen. Die beiden Teilbahnen 9 und 11 sind an einer Überlappungsnaht 12 miteinander verbunden. Die Überlappungsnaht 12 läuft über die gesamte Länge der Markisenbahn 5, von der Wickelwelle 4 bis zu der Fallschiene 7, durch.

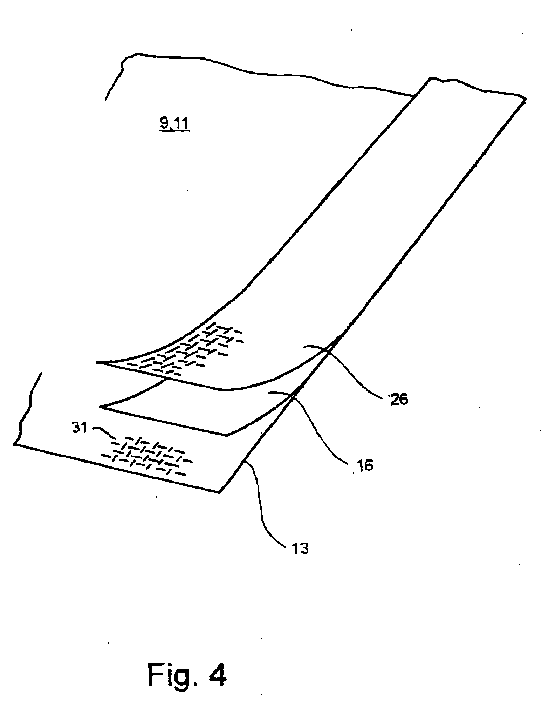

Die beiden außen liegenden Längskanten 13 der Markisenbahn 5 sind durch einen in Verbindung mit Fig. 4 erläuterten Umbug verstärkt.

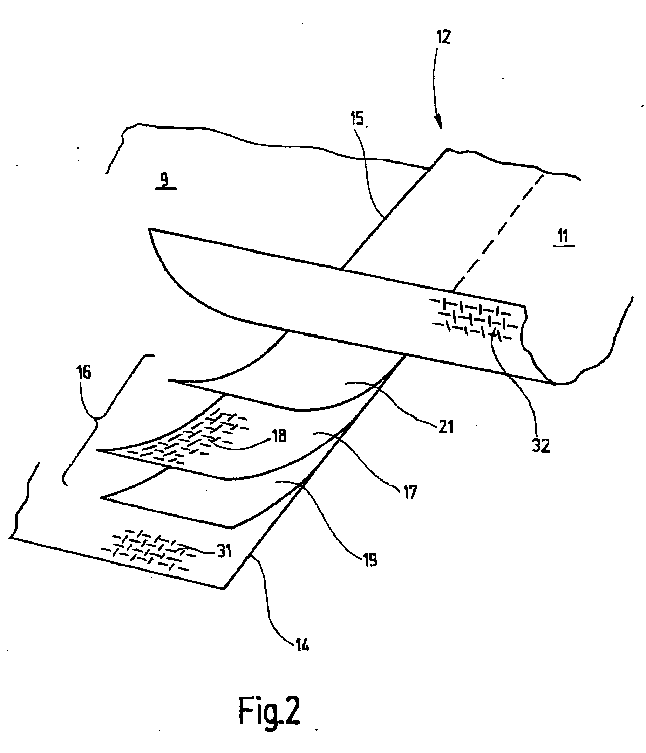

Der Aufbau der Überlappungsnaht ist vergrößert in Fig. 2 veranschaulicht.

Die beiden Teilbahnen 9 und 11 bestehen jeweils aus einem gewebten Markisenstoff, der gegebenenfalls mit einer farbigen Bedruckung versehen ist. Jede der beiden Teilbahnen endet im Bereich der Überlappungsnaht an einer Längs- oder Schnittkante 14 bzw. 15. Die Längskanten 14 und 15 sind gerade Kanten. Zur Überzeugung der Überlappungsnaht 12 liegt die Längskante 15 der Teilbahn 11, beispielsweise auf der Ober- oder Außenseite der Teilbahn 9, während die Längskante 15 auf der Innen- oder Unterseite der Teilbahn 11 zu liegen kommt. Auch im Bereich der Überlappung weisen die beiden Teilbahnen 9, 11 keinerlei besondere Zurichtung vor dem Verkleben auf, beispielsweise in Form einer Dickenvermiderung durch Abschleifen.

Um die beiden Teilbahnen 9 und 11 im Bereich der Überlappungsnaht 12 stoffschlüssig miteinander zu verbinden, ist ein Schmelzkleberband 16 zwischen die beiden Teilbahnen 9 und 11 eingefügt. Das Schmelzkleberband 16 enthält einen Träger 17, der, wie bei 18 angedeutet, aus einem Gewebe besteht. Das Gewebe 18 trägt auf beiden Seiten jeweils eine Schmelzkleberschicht 19 und 21. Die Schmelzkleberschicht besteht aus Polyurethan oder einem Polyolefin. Diese Materialien haben die Eigenschaft durch Wärmezufuhr, beispielsweise in Form von Ultraschallenergie, aufzuweichen und klebfähig zu werden. Im aufgeweichten Zustand sind sie in der Lage, die Teilbahn 9 mit dem Träger 17 und den Träger 17 mit der Teilbahn 11 zu verbinden.

Die Breite des Schmelzkleberbandes 16 entspricht der Überlappungsbreite der beiden Teilbahnen 9 und 11 im Bereich der Überlappungsnaht 12. Dadurch wird außerdem sicher gestellt, dass die Längskanten 14 und 15, falls sie keine Websondern Schnittkanten sind, durch den in das Gewebe einbringenden Schmelzkleber gegen Ausfransen fixiert sind.

In Fig. 2 ist das Schmelzkleberband 16 so dargestellt, als würde der Träger 17 auf beiden Seiten jeweils eine separate Schmelzkleberschicht 19 bzw. 21 tragen. Diese Aufgliederung ist lediglich aus Darstellungsgründen vorgenommen. Tatsächlich ist bei der praktischen Ausführung der Träger 17 mit Schmelzkleber getränkt, der durch den Träger 17 bzw. die Löcher in dem Gewebe hindurchführt und auf beiden Seiten eine mehr oder weniger starke Beschichtung bildet.

Die Herstellung der gezeigten Markisenbahn 5 geschieht in der Weise, dass die beiden Teilbahnen 9 und 11 einander überlappend, unter gleichzeitiger Zwischenlage des Schmelzkleberbandes 16, durch eine nicht veranschaulichte Ultraschallschweißeinrichtung hindurchgeführt werden. Die Ultraschallschweißeinrichtung besteht bekanntlich aus einem Amboss und einer Sonotrode. Im vorliegenden Fall wird ein rollender Amboss und eine rollende Sonotrode bevorzugt. Durch die angekoppelte Schwingungsenergie wird zwischen den beiden Lagen, die von den Teilbahnen 9 und 11 gebildet sind, der Schmelzkleber 19 und 21 aufgeschmolzen und in den klebfähigen Zustand gebracht. Der Schmelzkleber dringt dabei in die Löcher des Gewebes der Teilbahnen 9 und 11 ein und verbindet diese nach dem Erkalten flexibel miteinander.

Da die Zufuhr der Ultraschallenergie unter gleichzeitiger beträchtlicher Druckeinwirkung erfolgt um die Energie gut einkoppeln zu können, wird die Überlappungsnaht 12 während des Schweißvorgangs in Richtung der Dicke zusammengedrückt. Die Ultraschallschweißverbindung erkaltet sehr rasch. Dies hilft die durch das Zusammendrücken erzeugte Verminderung der Dicke "einzufrieren". Die schlussendlich erhaltene Überlappungsnaht 12 ist damit dünner, als es der Summe der Dicken der beiden Teilbahnen 9 und 11, zuzüglich des Trägers 17, entspricht. Bei einer praktischen Ausführung beträgt die Dicke des Trägers 17 ca. 0,1 mm bis 0,2 mm, während die Dicke der Markisenbahnen bei ca 0,5 bis ca 0,6 mm liegt. Die endgültige Dicke der Überlappungsnaht 12 beträgt zwischen 1,0 und 1,2 mm.

Durch das Ultraschallschweißen der Markisenbahn wird im Bereich der Überlappungsnaht 12 auf diese Weise nur eine geringe Materialverdickung erreicht.

Der primäre Zweck des Trägers 17 besteht darin zu verhindern, dass das zugeführte Schmelzkleberband 16 an der Einlaufstelle zwischen die beiden Teilbahnen 9 und 11 in Folge der Erweichung durch die zugeführte Ultraschallenergie zu weich wird und abreißt. Es genügt also einen Träger 17 zu verwenden, dessen Festigkeit ein Abreißen des Schmelzkleberbandes 16 verhindert. Diese Art von Schmelzklebeband eignet sich auch zum thermischen Verschweißen. Er braucht deswegen nicht reißfester zu sein als die beiden Teilbahnen 9 oder 11. Das Gewebe des Trägers 16 kann aus Fäden in Form von Monofilamenten oder aus Fäden aus Stapelfasern bestehen. Die Verwendung von Vliesen ist auch möglich.

Darüber hinaus kann für den Träger 17 auch ein Material verwendet werden, dessen Dehnfestigkeit geringer ist als die Dehnfähigkeit der beiden Teilbahnen 9 und 11. Hierdurch kann im Bereich der Überlappungsnaht 12 ein Element in Gestalt des Trägers 17 eingearbeitet werden, der die Zugkraft in der Markisenbahn 5 überträgt und somit das eigentliche Gewebe der Teilbahnen 9 und 11 entlastet.

Eine weitere Variante besteht darin, ein Schmelzkleberband zu verwenden, dass aus einem Träger 17 und lediglich einer der beiden Schmelzkleberschichten 19 oder 21 besteht. Dies hat den Vorteil, auf der Vorratsrolle bei der Zufuhr besser handhabbar zu sein, weil nicht die Gefahr besteht, dass klebrige Lagen im Wickel aneinander haften. Während des Schmelzklebervorgangs beim Ultraschallschweißen wird dafür gesorgt, dass an der auf einer Seite des Trägers vorhandene Schmelzkleber 19 oder 21 durch den durchlässigen Träger 17 hindurch dringt und sich somit gleichmäßig in dem Gewebe der Teilbahn 9 sowie der Teilbahn 11 und dem Träger 18 im Bereich der Überlappungsnaht 12 verteilt.

Die Überlappungsnaht ist unempfindlich gegen geringfügige breiten Schwankungen, d.h. die Überlappungsnaht ist so breit, dass Schwankungen optisch nicht störend in Erscheinung treten.

Da die Seitenkante 13 in den seltensten Fällen eine Webkante ist, die inhärent gegen Ausdrieseln und Ausfansen geschützt, ist sie mit einem Umbug 25 versehen. Der Umbug 25 wird erzeugt, in dem in dem Bereich der Seitenkante 13 die betreffende Teilbahn 9 oder 11 um 180° auf sich selber umgeschlagen wird, wodurch im Bereich des Umbugs 25 ein doppelllagiges Gebilde entsteht. Das doppelllagige Gebilde des Umbugs 25 wird mit einem Schmelzkleberstreifen 16 fixiert, wie er ausführlich im Zusammenhang mit Fig. 2 erläutert ist.

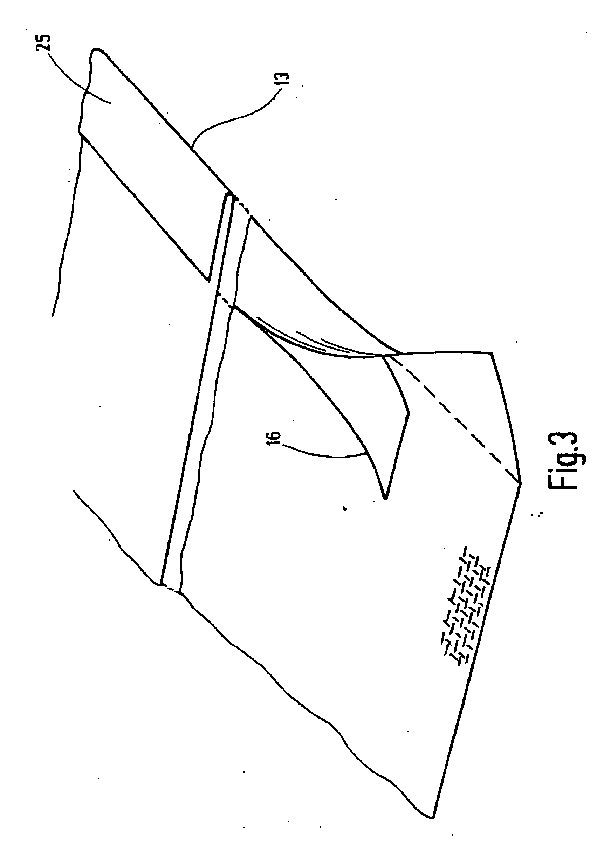

Die erforderliche Kantenverstärkung an der Markisenbahn kann nicht nur, wie in Fig. 3 gezeigt, mit Hilfe des Umbugs 25 erzeugt werden, sondern es kann, wie Fig. 4 zeigt, auch ein Streifen 26 aus dem Material der Bahn 9 oder 11 unmittelbar an die Seitenkante 13 angrenzend aufgeklebt bzw. aufgeschweißt werden. Hierzu wird ein Schmelzkleberstreifen 16 verwendet wie er ausführlich in Fig. 2 beschrieben ist,

Die mehrfach erläuterte Reduktion der maximalen Werkstückverdickung an dieser Stelle wird auch bei der Verwendung des Streifens 26 erreicht.

Die Verwendung des Umbugs 25 oder des Streifen 26 in Verbindung mit der Überlappungsnaht 12 führt dazu, dass die Markisenbahn 5 auch im mittleren Bereich Streifen bildet, die denselben Wickeldurchmesser erzeugen, wie die Ränder. Dadurch wird ein gerader Wickel auf der Wickelwelle erzeugt, die Gefahr vermieden, dass die Markise sich beim Aufwickeln auf der Wickelwelle 4 konusförmig nach der Seite bewegt. Andererseits ist die Seitenkante 13 eine saubere gerade Kante, die keine freien Faden- oder Faserenden zeigt, die zum Ausfransen neigen.

Anstatt ein Schmelzkleberband 16 zu verwenden, dessen Träger ein Gewebe 18 ist, kann gemäß Fig. 4 ein Schmelzkleberband 16 eingesetzt werden, dass lediglich aus in Längsrichtung nebeneinander verlaufenden Monofilamenten besteht, von denen jedes für sich mit einer schmelzklebfähigen Hülle 28 versehen ist. Die Monofilamente 27 sind gleichsam lediglich das Substrat mit dessen Hilfe der Schmelzkleber zugeführt wird. Die Festigkeit in Querrichtung wird im Bereich der fertigen Überlappungsnaht 12 durch das Grundmaterial der beiden Teilbahnen 9 und 11 erzeugt.

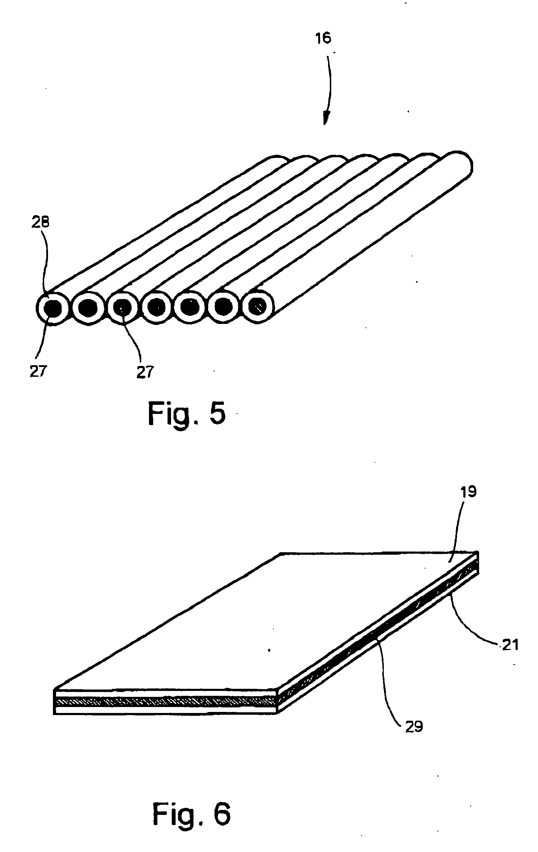

Fig. 5 zeigt schließlich die Ausführung des Schmelzkleberbandes 16 unter Verwendung einer Folie 29 als Träger auf der beidseitig die beiden Schmelzkleberschichten 19 und 21 aufgebracht sind. Da die Folie 29 für sich undurchlässig ist, benötigt sie hier tatsächlich Schmelzkleberschichten auf beiden Seiten um die gewünschte Funktion zu erbringen.

Die Monofilamente bzw. die Fäden des Gewebes 18 können beispielsweise Glasfäden sein. Diese sind sehr reißfest und obendrein UV unempfindlich.

Bei einer Markise setzt sich die Markisenbahn aus einzelnen Teilbahnen zusammen. Die Teilbahnen sind an Überlappungsnähten miteinander verbunden. Im Bereich der Überlappungsnähte sind die Teilbahnen mittels eines durch Verstärkung reißfesten Schmelzkleberbands miteinander verklebt bzw. verschweißt. Die Seitenkanten sind mit einem Umbug versehen der ebenfalls mit Hilfe eines Schmelzklebers stabilisiert ist.

## Patentansprüche

1. Tuch- oder Folienbahn (5), insbesondere für Beschattungseinrichtungen (1) oder Werbeträger,
mit einer ersten Teilbahn (9,11), die eine gerade Nahtkante (14,15) aufweist und aus einem reißfesten Grundmaterial besteht,
mit wenigstens einer zweiten Teilbahn (9,11), die aus einem reißfesten Grundmaterial besteht und die wenigstens eine gerade Nahtkante (14,15) aufweist, die überlappende neben der Nahtkante (14,15) der ersten Teilbahn (9,11) verläuft, derart, dass es einen Streifen (12) gibt, an den sich die beiden Teilbahnen (9,11) überlappen, und
mit einem Schmelzklebeband (16), das sich in dem streifenförmigen Überlappungsbereich (12) zwischen den Teilbahnen (9,11) befindet, um die beiden Teilbahnen (9,11) dort miteinander zu verbinden und mit diesen dort schmelzverklebt ist, und das einen Träger (17,27,29) in Gestalt von Fäden (27) aufweist, die bei der beim Schmelzkleben auftretenden Temperatur reißfest bleiben.

2. Tuch- oder Folienbahn nach Anspruch 1, **dadurch gekennzeichnet, dass** der Träger (17) weniger dehnbar und/oder weniger reißfest ist als die Teilbahnen (9,11).

3. Tuch- oder Folienbahn nach Anspruch 1, **dadurch gekennzeichnet, dass** der Träger (17,27,29) mit Schmelzkleber (19,21) getränkt ist.

4. Tuch- oder Folienbahn nach Anspruch 1, **dadurch gekennzeichnet, dass** die Fäden (27) des Trägers (17,27,29) mit Schmelzkleber (28) ummantelt sind.

5. Tuch- oder Folienbahn nach Anspruch 1, **dadurch gekennzeichnet, dass** die Fäden aus Fasern oder jeweils aus wenigstens einem Monofilament (27) bestehen.

6. Tuch- oder Folienbahn nach Anspruch 1, **dadurch gekennzeichnet, dass** der Schmelzkleber Polyurethan oder ein Polyolefin ist.

7. Tuch- oder Folienbahn nach Anspruch 6, **dadurch gekennzeichnet, dass** die Monofilamente Glas- oder Mineral- oder Kunststofffasern oder Metalldrähte sind.

8. Tuch- oder Folienbahn nach Anspruch 1, **dadurch gekennzeichnet, dass** die Fäden (27) lediglich in Längsrichtung des Trägers (16) liegen.

9. Tuch- oder Folienbahn nach Anspruch 1, **dadurch gekennzeichnet, dass** die Fäden (27) innerhalb des Trägers (16) ein Gewebe (18) oder ein Vlies bilden.

10. Tuch- oder Folienbahn nach Anspruch 1, **dadurch gekennzeichnet, dass** der Träger (16) lediglich eine Art Fäden enthält.

11. Tuch- oder Folienbahn nach Anspruch 1, **dadurch gekennzeichnet, dass** die gesamte Materialstärke im Überlappungsbereich (12) nicht größer als das Doppelte der Materialstärke der einzelnen Tuchbahn (9,11) ist, vorzugsweise kleiner als das 1,8-fache.

12. Tuch- oder Folienbahn nach Anspruch 1, **dadurch gekennzeichnet, dass** der Schmelzkleber (19,21) UV-beständig ist.

13. Tuch- oder Folienbahn (5), insbesondere für Beschattungseinrichtungen (1) oder Werbeträger, die aus einem reißfesten Grundmaterial besteht,
mit wenigstens einem eine Randkante (13) bildenden Umbug (25), an dem die Tuch- oder Folienbahn (5) in einem streifenförmigen Bereich doppelllagig ist,
mit einem Schmelzklebeband (16), das sich innerhalb des streifenförmigen Bereich des Umbugs (25) befindet, um die beiden Lagen dort miteinander zu verbinden, und das einen Träger (17) in Gestalt von Fäden aufweist, die bei der beim Schmelzkleben auftretenden Temperatur reißfest bleiben.

14. Tuch- oder Folienbahn nach Anspruch 13, **dadurch gekennzeichnet, dass** der Träger (17,27,29) weniger dehnbar und/oder weniger reißfest ist als die Tuch- oder Folienbahn (5).

15. Tuch- oder Folienbahn nach Anspruch 13, **dadurch gekennzeichnet, dass** der Träger (17,27,29) mit Schmelzkleber (19,21) getränkt ist.

16. Tuch- oder Folienbahn nach Anspruch 13, **dadurch gekennzeichnet, dass** die Fäden (27) des Trägers (17,27,29) mit Schmelzkleber (28) ummantelt sind.

17. Tuch- oder Folienbahn nach Anspruch 13, **dadurch gekennzeichnet, dass** die Fäden aus Fasern oder jeweils aus wenigstens einem Monofilament (27) bestehen.

18. Tuch- oder Folienbahn nach Anspruch 13, **dadurch gekennzeichnet, dass** der Schmelzkleber Polyurethan oder ein Polyolefin ist.

19. Tuch- oder Folienbahn nach Anspruch 17, **dadurch gekennzeichnet, dass** die Monofilamente Glas- oder Mineral- oder Kunststofffasern oder Metalldrähte sind.

20. Tuch- oder Folienbahn nach Anspruch 13, **dadurch gekennzeichnet, dass** der Schmelzkleber UV-beständig ist.

21. Tuch- oder Folienbahn nach Anspruch 13, **dadurch gekennzeichnet, dass** die Fäden (27) lediglich in Längsrichtung des Trägers (16) liegen.

22. Tuch- oder Folienbahn nach Anspruch 13, **dadurch gekennzeichnet, dass** die Fäden (27) innerhalb des Trägers (16) ein Gewebe (18) oder ein Vlies bilden.

23. Tuch- oder Folienbahn nach Anspruch 13, **dadurch gekennzeichnet, dass** der Träger (16) lediglich eine Art Fäden enthält.

24. Tuch- oder Folienbahn nach Anspruch 13, **dadurch gekennzeichnet, dass** die gesamte Materialstärke im Überlappungsbereich nicht größer als das Doppelter der Materialstärke der einzelnen Tuchbahn ist, vorzugsweise kleiner als das 1,8 fache.

25. Tuch- oder Folienbahn (5), insbesondere für Beschattungseinrichtungen (1) oder Werbeträger, die aus einem reißfesten Grundmaterial besteht,
mit wenigstens einem längs der Randkante (13) verlaufenden Streifen (26) aus dem Material der Tuch- oder Folienbahn (9,11), und
mit einem Schmelzkleberband (16), das sich ausschließlich in dem Bereich des Streifens (26) befindet, um dort den streifen mit der Tuch- oder Folienbahn (9,11) zu verbinden und das einen Träger (17) in Gestalt von Fäden aufweist, die bei der beim Schmelzkleben auftretenden Temperatur reißfest bleiben.

26. Tuch- oder Folienbahn nach Anspruch 25, **dadurch gekennzeichnet, dass** der Träger (17,27,29) weniger dehnbar und/oder weniger reißfest ist als die Tuch- oder Folienbahn (5).

27. Tuch- oder Folienbahn nach Anspruch 25, **dadurch gekennzeichnet, dass** der Träger (17,27,29) mit Schmelzkleber (19,21) getränkt ist.

28. Tuch- oder Folienbahn nach Anspruch 25, **dadurch gekennzeichnet, dass** die Fäden (27) des Trägers (17,27,29) mit Schmelzkleber (28) ummantelt sind.

29. Tuch- oder Folienbahn nach Anspruch 25, **dadurch gekennzeichnet, dass** die Fäden aus Fasern oder jeweils aus wenigstens einem Monofilament (27) bestehen.

30. Tuch- oder Folienbahn nach Anspruch 25, **dadurch gekennzeichnet, dass** der Schmelzkleber Polyurethan oder ein Polyolefin ist.

31. Tuch- oder Folienbahn nach Anspruch 30, **dadurch gekennzeichnet, dass** die Monofilamente Glas- oder Mineral- oder Kunststofffasern oder Metalldrähte sind.

32. Tuch- oder Folienbahn nach Anspruch 25, **dadurch gekennzeichnet, dass** der Schmelzkleber UV-beständig ist.

33. Tuch- oder Folienbahn nach Anspruch 25, **dadurch gekennzeichnet, dass** die Fäden (27) lediglich in Längsrichtung des Trägers (16) liegen.

34. Tuch- oder Folienbahn nach Anspruch 25, **dadurch gekennzeichnet, dass** die Fäden (27) innerhalb des Trägers (16) ein Gewebe (18) oder ein Vlies bilden.

35. Tuch- oder Folienbahn nach Anspruch 25, **dadurch gekennzeichnet, dass** der Träger (16) lediglich eine Art Fäden enthält.

36. Tuch- oder Folienbahn nach Anspruch 25, **dadurch gekennzeichnet, dass** die gesamte Materialstärke im Überlappungsbereich nicht größer als das Doppelter der Materialstärke der einzelnen Tuchbahn ist, vorzugsweise kleiner als das 1,8 fache.

## Claims

1. Cloth or film sheet (5), in particular for shading arrangements (1) or advertising carriers,
with a first component sheet (9, 11), which has a straight seam edge (14, 15) and is made from a tear-resistant base material,
with at least one second component sheet (9, 11), which is made from a tear-resistant base material and has at least one straight seam edge (14, 15) running next to the abutment edge (14, 15) of the first component sheet (9, 11) with an overlap such that there is a strip (12), at which the two component sheets (9, 11) overlap, and
with a hot-melt adhesive band (16), which is located in the strip-shaped overlapping region (12) between the component sheets (9, 11) in order to join the two component sheets (9, 11) together there and is hot-melted to these there, and which has a support (17, 27, 29) in the form of threads (27), which remain tear-resistant at the temperature arising during the holt-melt adhesion.

2. Cloth or film sheet according to claim 1, **characterised in that** the support (17) is less elastic and/or less tear-resistant than the component sheets (9, 11).

3. Cloth or film sheet according to claim 1, **characterised in that** the support (17, 27, 29) is impregnated with hot-melt adhesive (19, 21).

4. Cloth or film sheet according to claim 1, **characterised in that** the threads (27) of the support (17, 27, 29) are encased in hot-melt adhesive (28).

5. Cloth or film sheet according to claim 1, **characterised in that** the threads are composed of fibres or respectively from at least one monofilament (27).

6. Cloth or film sheet according to claim 1, **characterised in that** the hot-melt adhesive is polyurethane or a polyolefin.

7. Cloth or film sheet according to claim 6, **characterised in that** the monofilaments are glass or mineral or synthetic fibres or metal wires.

8. Cloth or film sheet according to claim 1, **characterised in that** the threads (27) lie only in the longitudinal direction of the support (16).

9. Cloth or film sheet according to claim 1, **characterised in that** the threads (27) inside the support (16) form a woven fabric (18) or a nonwoven.

10. Cloth or film sheet according to claim 1, **characterised in that** the support (16) contains only one type of threads.

11. Cloth or film sheet according to claim 1, **characterised in that** the total material thickness in the overlapping region (12) is not more than double the material thickness of the individual component sheet (9, 11), preferably less than 1.8-fold.

12. Cloth or film sheet according to claim 1, **characterised in that** the hot-melt adhesive (19, 21) is UV-resistant.

13. Cloth or film sheet (5), in particular for shading arrangements (1) or advertising carriers, which is made from a tear-resistant base material,
with at least one fold (25) forming a border edge (13), at which the cloth or film sheet (5) is double-layered in a strip-shaped region,
with a hot-melt adhesive band (16), which is located inside the strip-shaped region of the fold (25) in order to join the two layers together there, and which has a support (17) in the form of threads, which remain tear-resistant at the temperature arising during the holt-melt adhesion.

14. Cloth or film sheet according to claim 13, **characterised in that** the support (17, 27, 29) is less elastic and/or less tear-resistant than the cloth or film component sheets (5).

15. Cloth or film sheet according to claim 13, **characterised in that** the support (17, 27, 29) is impregnated with hot-melt adhesive (19, 21).

16. Cloth or film sheet according to claim 13, **characterised in that** the threads (27) of the support (17, 27, 29) are encased in hot-melt adhesive (28).

17. Cloth or film sheet according to claim 13, **characterised in that** the threads are composed of fibres or respectively from at least one monofilament (27).

18. Cloth or film sheet according to claim 13, **characterised in that** the hot-melt adhesive is polyurethane or a polyolefin.

19. Cloth or film sheet according to claim 17, **characterised in that** the monofilaments are glass or mineral or synthetic fibres or metal wires.

20. Cloth or film sheet according to claim 13, **characterised in that** the hot-melt adhesive is UV-resistant.

21. Cloth or film sheet according to claim 13, **characterised in that** the threads (27) lie only in the longitudinal direction of the support (16).

22. Cloth or film sheet according to claim 13, **characterised in that** the threads (27) inside the support (16) form a woven fabric (18) or a nonwoven.

23. Cloth or film sheet according to claim 13, **characterised in that** the support (16) contains only one type of threads.

24. Cloth or film sheet according to claim 13, **characterised in that** the total material thickness in the overlapping region is not more than double the material thickness of the individual component sheet, preferably less than 1.8-fold.

25. Cloth or film sheet (5), in particular for shading arrangements (1) or advertising carriers, which is made from a tear-resistant base material,
with at least one strip (26) running along the border edge (13) and made of the material of the cloth or film sheet (9, 11), and
with a hot-melt adhesive band (16), which is located solely in the region of the strip (26) in order to join the strip with the cloth or film sheet (9, 11) there, and which has a support (17) in the form of threads, which remain tear-resistant at the temperature arising during the holt-melt adhesion.

26. Cloth or film sheet according to claim 25, **characterised in that** the support (17, 27, 29) is less elastic and/or less tear-resistant than the cloth or film sheet (5).

27. Cloth or film sheet according to claim 25, **characterised in that** the support (17, 27, 29) is impregnated with hot-melt adhesive (19, 21).

28. Cloth or film sheet according to claim 25, **characterised in that** the threads (27) of the support (17, 27, 29) are encased in hot-melt adhesive (28).

29. Cloth or film sheet according to claim 25, **characterised in that** the threads are composed of fibres or respectively from at least one monofilament (27).

30. Cloth or film sheet according to claim 25, **characterised in that** the hot-melt adhesive is polyurethane or a polyolefin.

31. Cloth or film sheet according to claim 30, **characterised in that** the monofilaments are glass or mineral or synthetic fibres or metal wires.

32. Cloth or film sheet according to claim 25, **characterised in that** the hot-melt adhesive is UV-resistant.

33. Cloth or film sheet according to claim 25, **characterised in that** the threads (27) lie only in longitudinal direction of the support (16).

34. Cloth or film sheet according to claim 25, **characterised in that** the threads (27) inside the support (16) form a woven fabric (18) or a nonwoven.

35. Cloth or film sheet according to claim 25, **characterised in that** the support (16) contains only one type of threads.

36. Cloth or film sheet according to claim 25, **characterised in that** the total material thickness in the overlapping region is not more than double the material thickness of the individual component sheet, preferably less than 1.8-fold.

## Revendications

1. Bande de toile ou de feuille (5), destinée en particulier à des dispositifs de protection solaire (1) ou des supports publicitaires,
comprenant un premier lé (9, 11) qui présente un bord de jonction (14, 15) rectiligne et est constitué d'une matière de base résistant à la déchirure,
comprenant au moins un deuxième lé (9, 11) qui est constitué d'une matière de base résistant à la déchirure et présente au moins un bord de jonction (14, 15) rectiligne qui s'étend, en le chevauchant, à côté du bord de jonction (14, 15) du premier lé (9, 11), de manière à former une bande (12) dans laquelle se recouvrent les deux lés (9, 11), et
comprenant une bande d'adhésif thermofusible (16) qui se trouve dans la zone de recouvrement (12) en forme de bande entre les lés (9, 11), afin de relier les deux lés (9, 11) entre eux à cet endroit, et est collée par fusion aux lés à cet endroit, et qui présente un support (17, 27, 29) sous forme de fils (27) qui conservent leur résistance à la déchirure en présence de la température s'établissant lors du thermocollage.

2. Bande de toile ou de feuille selon la revendication 1, **caractérisée par le fait que** le support (17) est moins extensible et/ou moins résistant à la déchirure que les lés (9, 11).

3. Bande de toile ou de feuille selon la revendication 1, **caractérisée par le fait que** le support (17,27,29) est imprégné d'adhésif thermofusible (19, 21).

4. Bande de toile ou de feuille selon la revendication 1, **caractérisée par le fait que** les fils (27) du support (17, 27, 29) sont enrobés d'adhésif thermofusible (28).

5. Bande de toile ou de feuille selon la revendication 1, **caractérisée par le fait que** les fils sont constitués de fibres ou respectivement d'au moins un monofilament (27).

6. Bande de toile ou de feuille selon la revendication 1, **caractérisée par le fait que** l'adhésif thermofusible est du polyuréthane ou une polyoléfine.

7. Bande de toile ou de feuille selon la revendication 6, **caractérisée par le fait que** les monofilaments sont des fibres de verre ou des fibres minérales ou des fibres synthétiques ou des fils métalliques.

8. Bande de toile ou de feuille selon la revendication 1, **caractérisée par le fait que** les fils (27) s'étendent uniquement dans le sens longitudinal du support (16).

9. Bande de toile ou de feuille selon la revendication 1, **caractérisée par le fait que** les fils (27) forment une structure tissée (18) ou une structure non tissée à l'intérieur du support (16).

10. Bande de toile ou de feuille selon la revendication 1, **caractérisée par le fait que** le support (16) contient un seul type de fils.

11. Bande de toile ou de feuille selon la revendication 1, **caractérisée par le fait que** l'épaisseur de matière totale dans la zone de recouvrement (12) n'est pas supérieure au double de l'épaisseur de matière de chaque lé de toile (9, 11) et est de préférence inférieure à 1,8 fois cette épaisseur.

12. Bande de toile ou de feuille selon la revendication 1, **caractérisée par le fait que** l'adhésif thermofusible (19, 21) résiste au rayonnement UV.

13. Bande de toile ou de feuille (5), destinée en particulier à des dispositifs de protection solaire (1) ou des supports publicitaires et constituée d'une matière de base résistant à la déchirure,
comprenant au moins un ourlet (25) qui forme un bord (13) et dans lequel la bande de toile ou de feuille (5) est disposée en deux couches dans une zone en forme de bande,
comprenant une bande d'adhésif thermofusible (16) qui se trouve à l'intérieur de la zone en forme de bande de l'ourlet (25), afin de relier les deux couches entre elles à cet endroit, et qui présente un support (17) sous forme de fils qui conservent leur résistance à la déchirure en présence de la température s'établissant lors du thermocollage.

14. Bande de toile ou de feuille selon la revendication 13, **caractérisée par le fait que** le support (17, 27, 29) est moins extensible et/ou moins résistant à la déchirure que la bande de toile ou de feuille (5).

15. Bande de toile ou de feuille selon la revendication 13, **caractérisée par le fait que** le support (17, 27, 29) est imprégné d'adhésif thermofusible (19, 21).

16. Bande de toile ou de feuille selon la revendication 13, **caractérisée par le fait que** les fils (27) du support (17, 27, 29) sont enrobés d'adhésif thermofusible (28).

17. Bande de toile ou de feuille selon la revendication 13, **caractérisée par le fait que** les fils sont constitués de fibres ou respectivement d'au moins un monofilament (27).

18. Bande de toile ou de feuille selon la revendication 13, **caractérisée par le fait que** l'adhésif thermofusible est du polyuréthane ou une polyoléfine.

19. Bande de toile ou de feuille selon la revendication 17, **caractérisée par le fait que** les monofilaments sont des fibres de verre ou des fibres minérales ou des fibres synthétiques ou des fils métalliques.

20. Bande de toile ou de feuille selon la revendication 13, **caractérisée par le fait que** l'adhésif thermofusible résiste au rayonnement UV.

21. Bande de toile ou de feuille selon la revendication 13, **caractérisée par le fait que** les fils (27) s'étendent uniquement dans le sens longitudinal du support (16).

22. Bande de toile ou de feuille selon la revendication 13, **caractérisée par le fait que** les fils (27) forment une structure tissée (18) ou une structure non tissée à l'intérieur du support (16).

23. Bande de toile ou de feuille selon la revendication 13, **caractérisée par le fait que** le support (16) contient un seul type de fils.

24. Bande de toile ou de feuille selon la revendication 13, **caractérisée par le fait que** l'épaisseur de matière totale dans la zone de recouvrement n'est pas supérieure au double de l'épaisseur de matière de chaque lé de toile et est de préférence inférieure à 1,8 fois cette épaisseur.

25. Bande de toile ou de feuille (5), destinée en particulier à des dispositifs de protection solaire (1) ou des supports publicitaires et constituée d'une matière de base résistant à la déchirure,
comprenant au moins une bande (26) qui s'étend le long du bord (13) et est réalisée dans la matière du lé de toile ou de feuille (9, 11), et
comprenant une bande d'adhésif thermofusible (16) qui se trouve exclusivement dans la zone de la bande (26), afin de relier à cet endroit la bande avec le lé de toile ou de feuille (9, 11), et qui présente un support (17) sous forme de fils qui conservent leur résistance à la déchirure en présence de la température s'établissant lors du thermocollage.

26. Bande de toile ou de feuille selon la revendication 25, **caractérisée par le fait que** le support (17, 27, 29) est moins extensible et/ou moins résistant à la déchirure que la bande de toile ou de feuille (5).

27. Bande de toile ou de feuille selon la revendication 25, **caractérisée par le fait que** le support (17, 27, 29) est imprégné d'adhésif thermofusible (19, 21).

28. Bande de toile ou de feuille selon la revendication 25, **caractérisée par le fait que** les fils (27) du support (17, 27, 29) sont enrobés d'adhésif thermofusible (28).

29. Bande de toile ou de feuille selon la revendication 25, **caractérisée par le fait que** les fils sont constitués de fibres ou respectivement d'au moins un monofilament (27).

30. Bande de toile ou de feuille selon la revendication 25, **caractérisée par le fait que** l'adhésif thermofusible est du polyuréthane ou une polyoléfine.

31. Bande de toile ou de feuille selon la revendication 30, **caractérisée par le fait que** les monofilaments sont des fibres de verre ou des fibres minérales ou des fibres synthétiques ou des fils métalliques.

32. Bande de toile ou de feuille selon la revendication 25, **caractérisée par le fait que** l'adhésif thermofusible résiste au rayonnement UV.

33. Bande de toile ou de feuille selon la revendication 25, **caractérisée par le fait que** les fils (27) s'étendent uniquement dans le sens longitudinal du support (16).

34. Bande de toile ou de feuille selon la revendication 25, **caractérisée par le fait que** les fils (27) forment une structure tissée (18) ou une structure non tissée à l'intérieur du support (16).

35. Bande de toile ou de feuille selon la revendication 25, **caractérisée par le fait que** le support (16) contient un seul type de fils.

36. Bande de toile ou de feuille selon la revendication 25, **caractérisée par le fait que** l'épaisseur de matière totale dans la zone de recouvrement n'est pas supérieure au double de l'épaisseur de matière de chaque lé de toile et est de préférence inférieure à 1,8 fois cette épaisseur.
